# EUROPEAN PATENT APPLICATION

(11) **EP 1 760 334 A1**
(43) Date of publication of application: **07.03.2007**
(21) Application number: 05745661.8
(22) Date of filing: 31.05.2005
(51) Int. Cl.: F16B 39/20, F16B 37/12, F16B 39/38, F16B 41/00

(54) **FALLING-OFF PREVENTION DEVICE AND LOOSENING PREVENTION NUT**

(30) Priority: 07.06.2004 JP 2004168756
(71) Applicant: Soeda, Taijiro, Ongagun Fukuoka 8114311 (JP); Soeda, Mayumi, Ongagun Fukuoka 8114311 (JP); SIT Co., Ltd., Kokuraminami-ku, Kitakyushu-shi Fukuoka 8000203 (JP)
(72) Inventor: SOEDA, Taijiro, 8114311 (JP); SOEDA, Mayumi, 8114311 (JP)
(74) Representative: Thinat, Michel
(86) International application number: PCT/JP2005/009977
(87) International publication number: WO 2005/121570

(57) **Abstract**

An object of the present invention is to provide a fall-off preventing element and a loosening preventing nut, which, by a wire of a coil spring, with a free lower end, being fitted onto a thread groove of a bolt, can prevent fall-off of a nut or loosening of a nut.

[Solution Means] The present invention provides a fall-off preventing element (1) that is screwed onto a bolt and includes: a coil spring portion (3); and a cylindrical main body (2), affixing an upper end of the coil spring portion and having an opening (7) formed therein in which a lower end of the coil spring portion is latched; and the coil spring portion is made smaller in its inner diameter than the outer diameter of a leg portion of the bolt, the lower end of the coil spring portion is latched in a diameter-expanded state to the cylindrical main body, and the lower end of the coil spring portion is enabled to move in a diameter-expanding direction.

## Description

### Field of the Art

The present invention relates to a fall-off preventing element and a loosening preventing nut. More specifically, the present invention relates to a fall-off preventing element and a loosening preventing nut that prevent, by means of an elastic force of a coil spring, the falling-off of a fixed obj ect, fixed by a bolt and a nut attached to the bolt, or the falling-off of a nut attached to a bolt.

### Background Art

Conventionally, methods for fastening by a bolt and a nut have been used popularly in various fields and, for example, are used widely from steel-frame buildings, steel towers, and road installations to automobiles and electrical products.

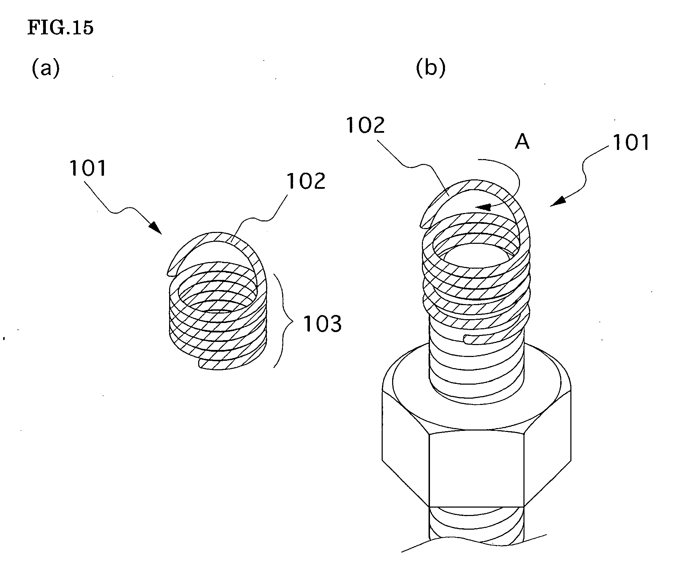

A fall-off preventing element 101, which is shown in FIG. 15 as an example of an arrangement that prevents the falling-off of a nut, is formed of metal or resin, etc., with elasticity and is arranged from a lug portion 102 and a coil spring portion 103.

Here, the inner diameter of the coil spring portion is made slightly smaller than the outer diameter of a leg portion of a bolt to attach the fall-off preventing element. To attach this fall-off preventing element to the leg portion of the bolt, the fall-off preventing element is put in contact with a tip of the bolt, screwed into a nut, and then rotated in the direction indicated by the symbol A in FIG. 15.

That is, by rotating the fall-off preventing element with the fall-off preventing element contacting the tip of the bolt, the coil spring is deformed in a direction in which the inner diameter of the coil spring portion is expanded, and the wire of the coil spring portion is thereby fitted from an end of the leg portion and along a thread groove provided on the leg portion of the bolt to fit the fall-off preventing element onto the end of the bolt (see, for example, Japanese Published Unexamined Patent Application No. 2001-59514).

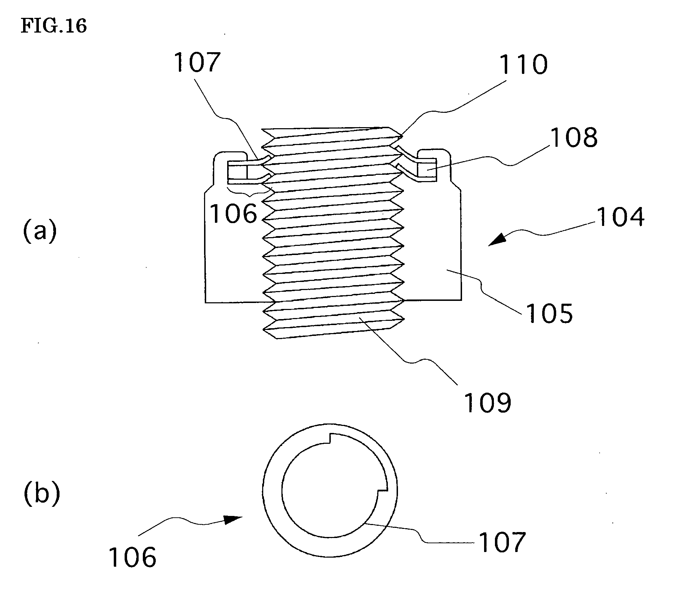

A loosening preventing nut 104, which is shown in FIG. 16 as an example of a nut having a fall-off preventing function, is arranged from a nut main body 105, and two or more rings 106, which have elasticity and are attached to an inner peripheral surface of the nut main body 105. An engaging tab 107 that protrudes inward in the radial direction is formed on an inner peripheral surface of each ring 106, a spacer 108 is interposedly fitted between the rings 106, and by the engaging tabs 107 of the rings 106 engaging with a thread 110 of a bolt 109, the loosening of a nut is prevented (see, for example, Japanese Published Unexamined Utility Model Application No. Hei 6-35637).

### Disclosure of the Invention

### Objects to be Solved by the Invention

However, with the fall-off preventing element of the above-described arrangement, because the fall-off preventing element must be attached after performing a nut fastening work, the work processes are doubled and the work is made extremely complicated.

Also, because the fall-off preventing element is formed from a coil spring, a special tool dedicated to the fall-off preventing element is needed to screw the fall-off preventing element onto the leg portion of a bolt, and because an offset wrench, etc., that is used for fastening a nut cannot be used in common as this special tool, the work is made troublesome.

Furthermore, to remove the fall-off preventing element, the coil spring must be forcibly expanded in diameter and because plastic deformation occurs due to this diameter expansion, the fall-off preventing element cannot be reused.

In addition, with the loosening preventing nut with the above-described arrangement, though fastening can be performed by work using a commonly used tool (such as an offset wrench), because the nut is fastened as the rings deform and cut into the thread of the bolt, the nut and the bolt are substantially prevented from being reused due to plastic deformation of the rings with the present arrangement.

Also, after the nut is loosened by an external impact, only frictional resistance due to plastic deformation is provided and there is thus the risk of fall-off due to vibration, etc., over a long term.

The present invention has been made in view of the above points, and an obj ect thereof is to provide a fall-off preventing element and a loosening preventing nut, which, by a wire of a coil spring, with a free lower end, being fitted onto a thread groove of a bolt, can prevent fall-off of a nut or loosening of a nut.

### Means for Solving the Problems

To achieve the above object, the present invention provides a fall-off preventing element that is screwed onto a bolt and includes: a coil spring portion; and a cylindrical main body, affixing an upper end of the coil spring portion and having an opening formed therein in which is latched a lower end of the coil spring portion; and the inner diameter of the coil spring portion is made smaller than the outer diameter of a leg portion of the bolt, the lower end of the coil spring portion is latched in a diameter-expanded state onto the cylindrical main body, and the lower end of the coil spring portion is enabled to move in a diameter-expanding direction.

Here, because the lower end of the coil spring portion that is inserted into the cylindrical main body is latched in the diameter-expanded state, the coil spring portion can be readily fitted onto a thread groove formed on the leg portion of the bolt, thus the fall-off preventing element is enabled to be readily screwed on.

When rotation of the cylindrical main body in a disengaging direction (loosening direction) is attempted, because the upper end of the coil spring portion is affixed to the cylindrical main body, the coil spring portion deforms in the direction of becoming reduced in its inner diameter, causing the wire of the coil spring portion to press against the thread groove and thereby rotation in the disengaging direction is prevented.

Furthermore, when the fall-off preventing element is to be removed, the fall-off preventing element can be removed readily by moving the lower end of the coil spring portion in the diameter-expanding direction and deforming the coil spring portion in the direction of becoming expanded in its inner diameter.

Also in order to achieve the above object, the present invention provides a loosening preventing nut that is screwed onto a bolt and includes: a coil spring portion; and a nut main body, having a coil spring inserting portion, affixing an upper end of the coil spring portion and having an opening formed therein in which a lower end of the coil spring portion is latched, and a threaded portion with a thread groove formed therein; and the inner diameter of the coil spring portion is made smaller than the outer diameter of a leg portion of the bolt, the lower end of the coil spring portion is latched in a diameter-expanded state onto the coil spring inserting portion, and the lower end of the coil spring portion is enabled to move in a diameter-expanding direction.

Here, because the lower end of the coil spring portion is latched onto the nut main body in the diameter-expanded state, the coil spring portion can be fitted readily onto a thread groove formed on the leg portion of the bolt, thus the loosening preventing nut is enabled to be readily screwed on.

Also, when rotation of the nut main body in a disengaging direction (loosening direction) is attempted, because the upper end of the coil spring portion is affixed to the nut main body, the coil spring portion deforms in the direction of becoming reduced in its inner diameter, the wire of the coil spring portion is caused to press against the thread groove and thereby rotation in the disengaging direction is prevented.

Furthermore, when the nut main body is to be removed from the bolt, the loosening preventing nut can be removed readily by moving the lower end of the coil spring portion in the diameter-expanding direction using a commonly used tool, etc., and deforming the coil spring portion in the direction of becoming expanded in its inner diameter.

### Effects of the Invention

With the fall-off preventing element and the loosening preventing nut according to the present invention, because in attachment onto a bolt, the lower end of the coil spring rotates in the fastening direction while becoming expanded in diameter, the frictional resistance with the thread groove of the bolt is reduced to enable fastening to be smoothly performed.

Also, when after fastening, a force in the disengaging direction acts due to vibration, impact, etc., because the coil spring portion is pulled in the direction of becoming reduced in its inner diameter, the wire of the coil spring portion is pressed more strongly against the thread groove of the bolt and rotation of a nut is thereby prevented.

Furthermore, when the fall-off preventing element or the loosening preventing nut is to be removed for disassembly of a fixed object, etc., by moving the lower end of the coil spring portion in the diameter-expanding direction by a commonly used tool, removal can be readily accomplished without plastically deforming the coil spring.

Attachment and removal of the fall-off preventing element and the loosening preventing nut can thus be readily performed by a commonly used tool, and the bolt, the fall-off preventing element, and the loosening preventing nut can be reused, because the thread groove of the bolt is free from flawing.

### Brief Description of the Drawings

[FIG. 1] is a schematic perspective view for describing an example of a fall-off preventing element according to the present invention;
[FIG. 2] is an explanatory sectional view for describing an arrangement of a wire of the coil spring portion in the fall-off preventing element according to the present invention;
[FIG. 3] is a schematic view for describing the attachment of the fall-off preventing element according to the present invention;
[FIG. 4] is a schematic view for describing a fastened state of the fall-off preventing element according to the present invention;
[FIG. 5] is a schematic view for describing a state of removing the fall-off preventing element according to the present invention;
[FIG. 6] is a schematic view for describing a state of fastening the fall-off preventing element according to the present invention by a commonly used tool;
[FIG. 7] is a schematic view for describing a state of removing the fall-off preventing element according to the present invention by a commonly used tool;
[FIG. 8] is a schematic perspective view for describing an example of a loosening preventing nut according to the present invention;
[FIG. 9] is an explanatory sectional view for describing an arrangement of a wire of the coil spring portion of a loosening preventing nut according to the present invention;
[FIG. 10] is a schematic view for describing the attachment of the loosening preventing nut according to the present invention;
[FIG. 11] is a schematic view for describing a fastened state of the loosening preventing nut according to the present invention;
[FIG. 12] is a schematic view for describing a state of removing the loosening preventing nut according to the present invention;
[FIG. 13] is a schematic view for describing a state of fastening the loosening preventing nut according to the present invention by a commonly used tool;
[FIG. 14] is a schematic view for describing a state of removing the loosening preventing nut according to the present invention by a commonly used tool;
[FIG. 15] is an explanatory view of an example of a conventional fall-off preventing element; and
[FIG. 16] is an explanatory view of an example of a conventional loosening preventing nut.

### Description of the Symbols

- 1: Fall-off preventing element
- 2: Cylindrical main body
- 3: Coil spring portion
- 4: Upper end
- 5: Lower end
- 6: Affixing hole
- 7: Opening
- 8: Protrusion
- 9: Bolt
- 10: Leg portion
- 11: Nut
- 12: Fastening tool
- 13: Latching corner portion
- 14: Hole
- 15: Threaded portion
- 16: Coil spring inserting portion
- 17: Nut main body
- 18: Fixed object
- 19: Loosening preventing nut

### Best Mode for Carrying Out the Invention

Embodiments of the present invention shall now be described with reference to the drawings to further the understanding of the present invention.

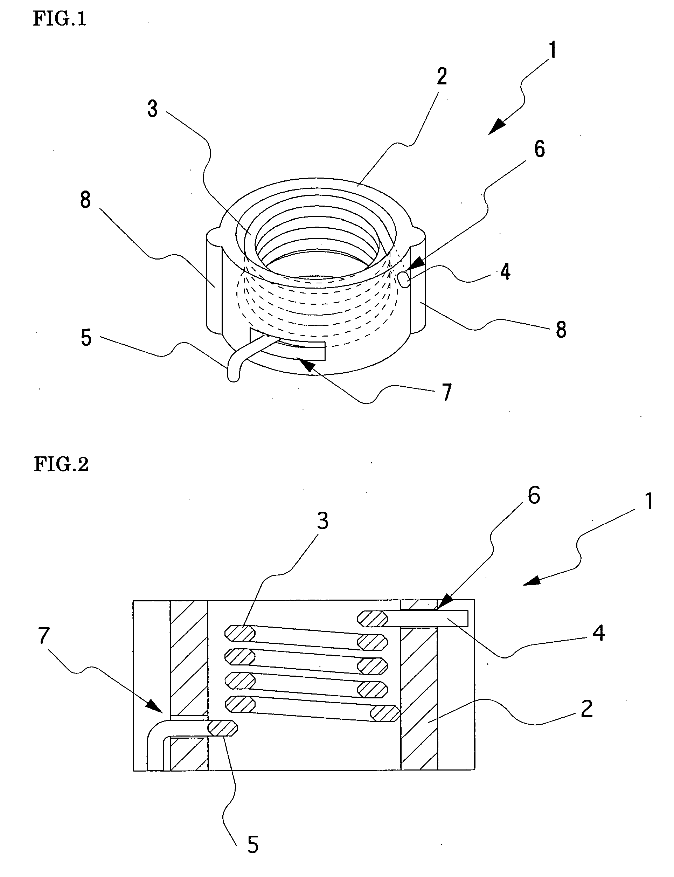

FIG. 1 is a schematic perspective view for describing an example of a fall-off preventing element according to the present invention, and FIG. 2 is an explanatory sectional view with respect to FIG. 1.

The fall-off preventing element 1 shown here has a cylindrical main body 2 and a coil spring portion 3 that is inserted into the cylindrical main body 2.

Here, the coil spring portion 3 is wound clockwise from a lower end portion to an upper end portion and is formed to a diameter that is slightly smaller than the outer diameter of a leg portion of a bolt. Furthermore, an upper end 4 and a lower end 5 of the coil spring portion 3 are bent outward.

The inner diameter of the cylindrical main body 2 is formed to be larger than the outer diameter of the leg portion of the bolt and a gap is formed between the outer diameter of the coil spring portion 3 and the inner diameter of the cylindrical main body 2 when the coil spring portion 3 is inserted into the cylindrical main body 2 so that the coil spring portion 3 can be expanded in diameter inside the cylindrical main body 2.

The upper end 4 of the coil spring portion 3 is inserted into an affixing hole 6, bored in an upper portion of the cylindrical main body 2, and is thereby fixed to the cylindrical main body 2. The lower end of the coil spring portion 3 is latched, with the lower end portion of the coil spring portion 3 being expanded in diameter, inside an opening 7, opened in a lower portion of the cylindrical main body 2.

For fixing of the upper end of the coil spring portion 3, any of various methods, such as adhesion, welding, or anchoring by making the tip of the upper end protrude outside the cylindrical main body and then bending the tip, etc., may be considered.

The opening 7 is opened to extend along a circumferential direction of the cylindrical main body 2 and is arranged so that the lower end of the coil spring portion 3, in the diameter-expanded state, is latched at a left end of the opening 7, and so that when the fastening of the fall-off preventing element 1 is completed, the lower end of the coil spring portion 3 is moved to a right end.

Protrusions 8 are formed along a vertical direction of an outer peripheral wall face of the cylindrical main body 2, and these protrusions 8 fit into corner portions (not shown) of an octagonal or dodecagonal socket wrench or offset wrench to enable rotation of the fall-off preventing element.

The position of the tip of the coil spring portion 3 that protrudes from the opening 7 lies along a circumscribing circle of the cylindrical main body and the tip of the coil spring portion is bent downward at a right angle.

Though the tip of the coil spring portion 3 is bent downward in the present embodiment, it may take on any form as long as it can be reliably latched and rotated in a removal direction by a commonly used tool.

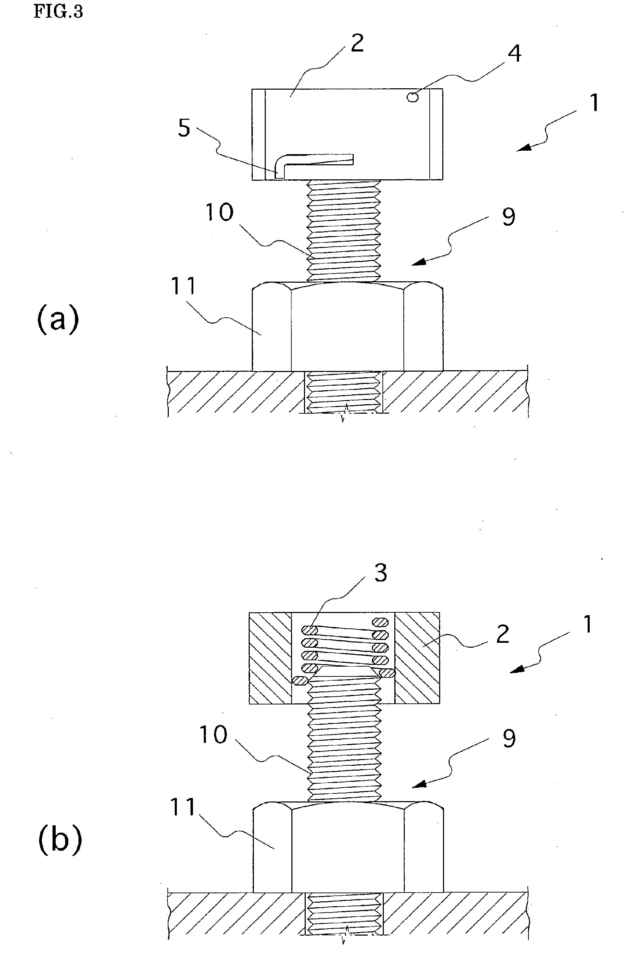

To attach the fall-off preventing element onto a bolt, the lower end of the cylindrical main body 2 is fitted onto a tip of a leg portion 10 of a bolt 9 and the wire of the lower end of the coil spring portion 3 that is inserted inside the cylindrical main body 2 is screwed onto a thread groove of the leg portion 10 of the bolt 9 as shown in FIGS. 3A and 3B. From this state, the cylindrical main body 2 is rotated in the clockwise direction (fastening direction) and the wire of the coil spring portion 3 is fitted along the thread groove of the leg portion 10 of the bolt 9 while the coil spring portion 3 is deformed in the direction of becoming expanded in its inner diameter. In this process, the wire that fits into the thread groove is slightly separated from the thread groove so that the frictional force between the coil spring portion 3 and the thread groove of the leg portion 10 is lessened, thereby the cylindrical main body 2 is enabled to be smoothly rotated.

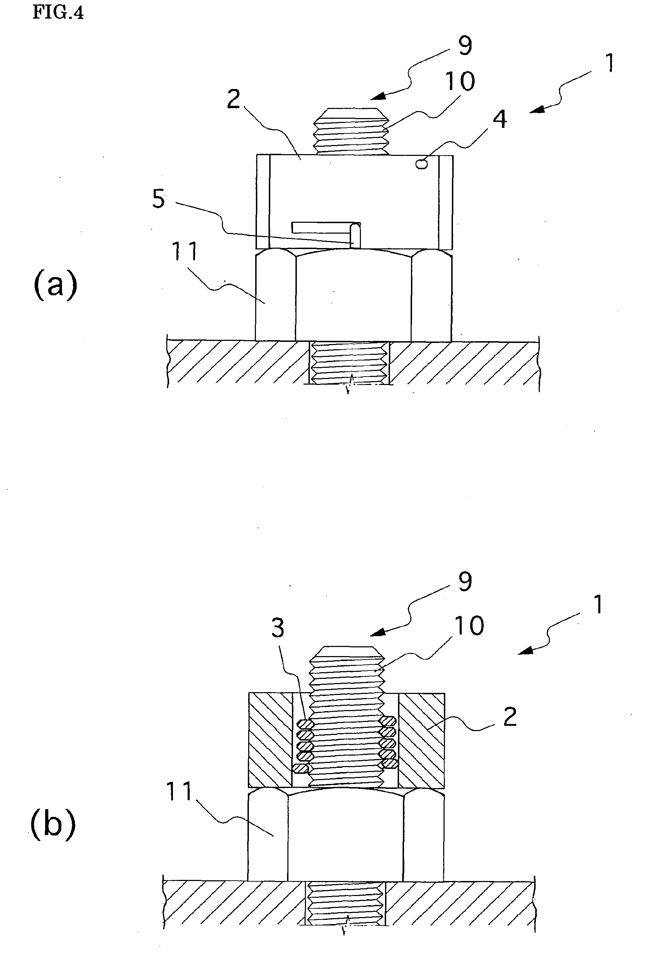

Thereafter, as shown in FIGS. 4A and 4B, the cylindrical main body 2 is rotated until the lower end of the cylindrical main body contacts an upper face of a nut 11 to be fastened and fastening is thereby completed. At this point, the tip of the lower end of the coil spring portion 3 is moved to the right end of the opening 7.

Here, when rotation of the cylindrical main body 2 in a disengaging direction (removal direction) is attempted, the coil spring portion 3 is pulled in a direction in which its inner diameter shrinks and because the wire of the coil spring portion 3 becomes more strongly pressed against the inclined face of the thread groove, formed on the leg portion of the bolt, rotation of the cylindrical main body is prevented.

Though with the present embodiment, an example of fastening by rotating the cylindrical main body until the lower end of the cylindrical main body contacts the upper face of the nut is described, even if the lower end of the cylindrical main body does not contact the upper face of the nut, adequate fastening can be achieved as long as the tip of the lower end of the coil spring portion is moved to the right end of the opening. That is, with the example of the fall-off preventing element according to the present invention, even if vibration or impact is applied after fastening, a force in the fastening direction acts via the coil spring portion and adequate fastening can be achieved, and the lower end of the cylindrical main body does not necessarily have to contact the upper face of the nut.

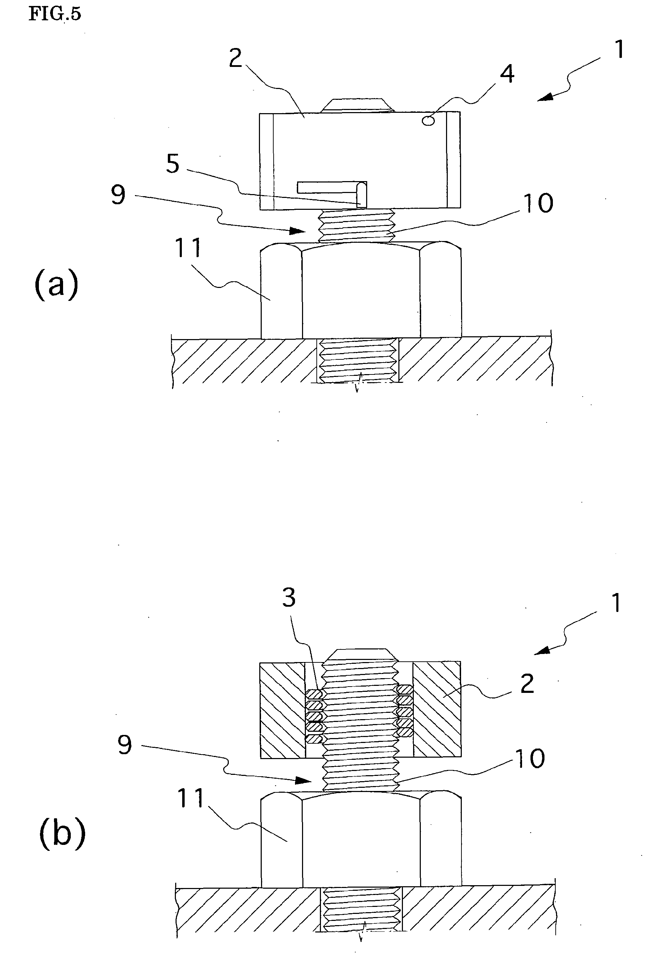

To remove the fall-off preventing element from the bolt, a rotating force in the disengaging direction (opposite direction with respect to the fastening direction) is applied with the lower end of the coil spring portion 3 being held as shown in FIGS. 5A and 5B to make the coil spring portion deform in a direction in which its inner diameter expands and the wire that fits into the thread groove, formed on the leg portion of the bolt, become slightly separated by the applied rotating force in the disengaging direction to thereby lessen the frictional force between the coil spring portion and the thread groove of the leg portion and enable smooth rotation in the removal direction and consequent removal of the fall-off preventing element from the bolt.

An example of handling of the fall-off preventing element by a commonly used tool shall now be described.

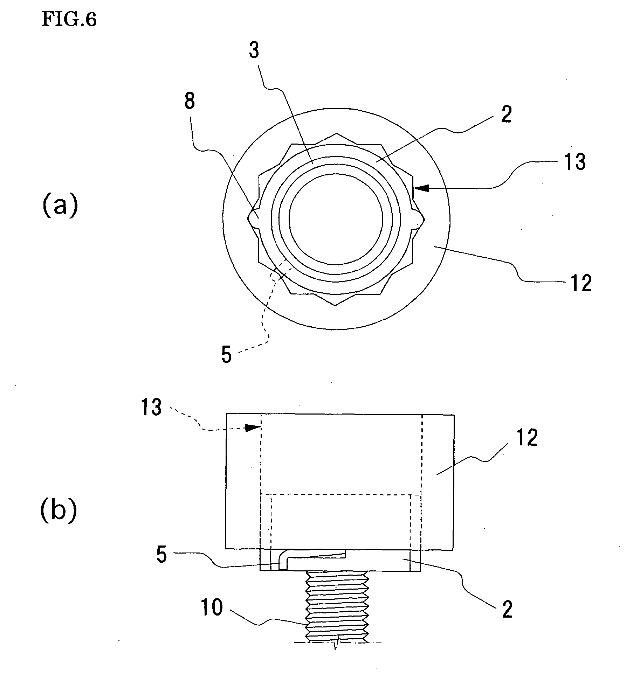

To attach the fall-off preventing element by means of a commonly used tool, first, the lower end of the cylindrical main body 2 is fitted onto the tip of the leg portion 10 of the bolt 9 as shown in FIGS. 6A and 6B. A dodecagonal offset wrench, socket wrench, or other fastening tool 12 is then fitted onto the cylindrical main body 2. Here, by the protrusions 8 of the cylindrical main body 2 being formed, for example, at positions of 180 degrees with respect to a central axial line of the cylindrical main body 2, the protrusions 8 become fitted and latched inside latching corner portions 13 of an inner face of the fastening tool 12, with a lower face of the fastening tool 12 being arrested by the lower end of the coil spring portion 3 that protrudes from inside the opening 7 opened in the lower portion of the cylindrical main body 2.

By then rotating the cylindrical main body 2 in the fastening direction by the fastening tool 12 in this state, the fall-off preventing element is attached to the bolt. When attachment is completed, the lower end of the coil spring portion 3 is positioned at the right end of the opening 7, that is, at a central position between the protrusions 8.

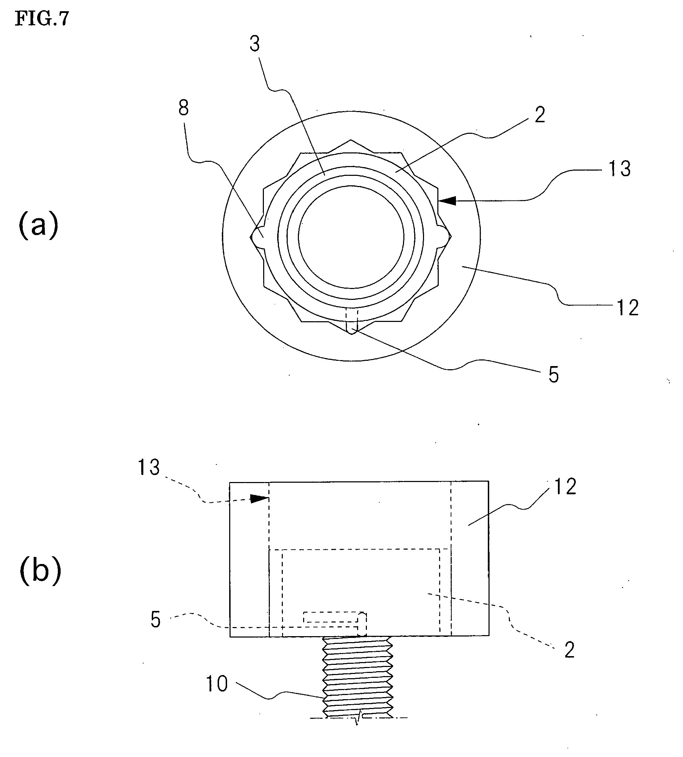

Meanwhile, to remove the fall-off preventing element by means of the commonly used tool, first, the fastening tool 12 is fitted onto the cylindrical main body 2 as shown in FIGS. 7A and 7B. Here, because the lower end of the coil spring portion 3 of the attached fall-off preventing element is positioned at the central position between the protrusions 8, that is, because the lower end of the coil spring portion 3 is in a state of protruding from inside the opening 7 at an angle of 90 degrees from the central axial line between the protrusions 8, the lower end of the coil spring portion 3 fits inside a latching corner portion 13 of the inner face of the fastening tool 12 so that the three locations of the protrusions 8 and the coil spring portion 3 are arrested.

Then from this state, the cylindrical main body 2 is rotated in the disengaging direction (removal direction) by means of the fastening tool 12 to remove the fall-off preventing element from the bolt. By rotating the lower end of the coil spring portion 3 so as to push it out in the disengaging direction (opposite direction with respect to the fastening direction) with the lower end being arrested by the fastening tool 12, the coil spring portion is deformed in the direction of becoming expanded in its inner diameter, and because the wire that fits in the thread groove formed on the leg portion of the bolt thus becomes slightly separated from the thread groove, the frictional force between the coil spring portion and the thread groove of the leg portion is lessened and rotation in the removal direction can be smoothly performed.

The number of protrusions provided on the outer peripheral surface of the cylindrical main body in the present embodiment does not necessarily have to be two, and any number of protrusions may be provided as long as these are provided at positions at which the protrusions fit into latching corner portions on the inner surface of the fastening tool.

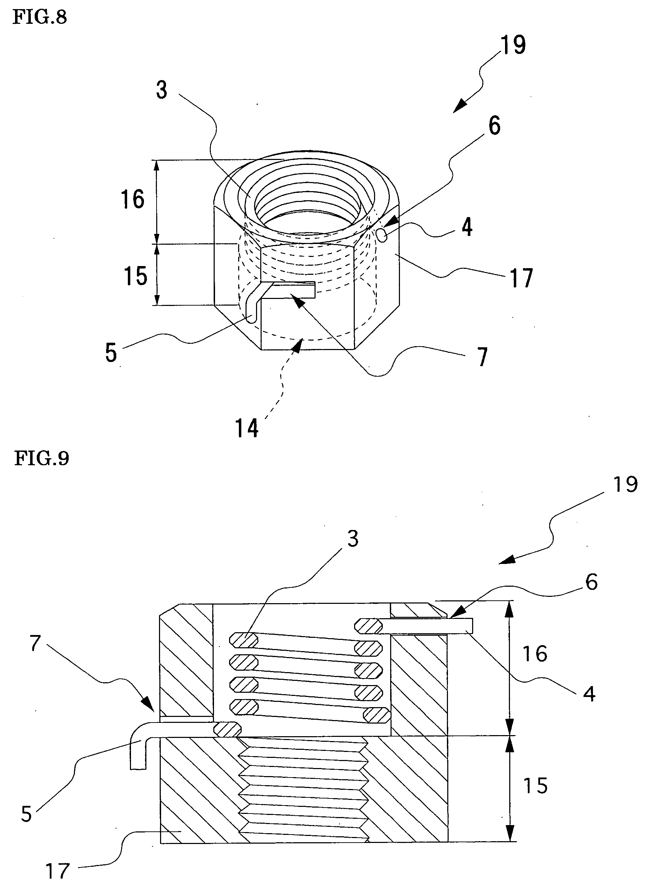

FIG. 8 is a schematic perspective view for describing an example of a loosening preventing nut according to the present invention, and FIG. 9 is an explanatory sectional view with respect to FIG. 8.

The loosening preventing nut 19 shown here has a nut main body 17, with which a portion, from a lower end of a hole 14 to an intermediate position toward an upper end of the hole 14, is arranged as a threaded portion 15 and a portion from the end of the threaded portion 15 to the upper end of the hole 14 is arranged as a coil spring inserting portion 16, and a coil spring portion 3.

Here, the coil spring inserting portion 16 of the nut main body 17 is formed to have an inner diameter that is larger than the outer diameter of the coil spring portion 3. Anaffixing hole 6 is bored in the upper end 4 of the coil spring inserting portion 16, and an opening 7 is opened in the lower end of the coil spring inserting portion 16.

The coil spring portion 3 is wound clockwise from a lower end portion to an upper end portion and is formed to a diameter that is slightly smaller than the outer diameter of a leg portion of a bolt. Furthermore, an upper end 4 and a lower end 5 of the coil spring portion 3 are bent outward.

The coil spring portion 3 is inserted into the coil spring inserting portion 16 of the nut main body 17, the upper end 4 of the coil spring portion 3 is inserted and fixed in the affixing hole 6, and the lower end 5 of the coil spring portion 3 is latched, in a diameter-expanded state, in the opening 7. A gap is thus formed between the outer diameter of the coil spring portion 3 and the inner diameter of the coil spring inserting portion 16 to enable the coil spring portion 3 to become expanded in diameter inside the coil spring inserting portion 16.

The opening 7 is opened to extend along a circumferential direction of the nut main body 17 and is arranged so that the lower end of the coil spring portion 3, in the diameter-expanded state, is latched at a left end of the opening 7, and a right end of the opening 7 is formed so that when the fastening of the loosening preventing nut 19 is completed, the lower end of the coil spring portion 3 is moved to the right end and the lower end of the coil spring portion 3 becomes positioned at a central position at one side of the nut main body 17.

The position of the tip of the coil spring portion 3 that protrudes from the opening 7 lies along a circumscribing circle of the nut main body 17 and the tip of the coil spring portion is bent downward at a right angle.

Though the tip of the coil spring portion 3 is bent downward in the present embodiment, it may take on any form as long as it can be reliably latched and rotated in a removal direction by a commonly used tool.

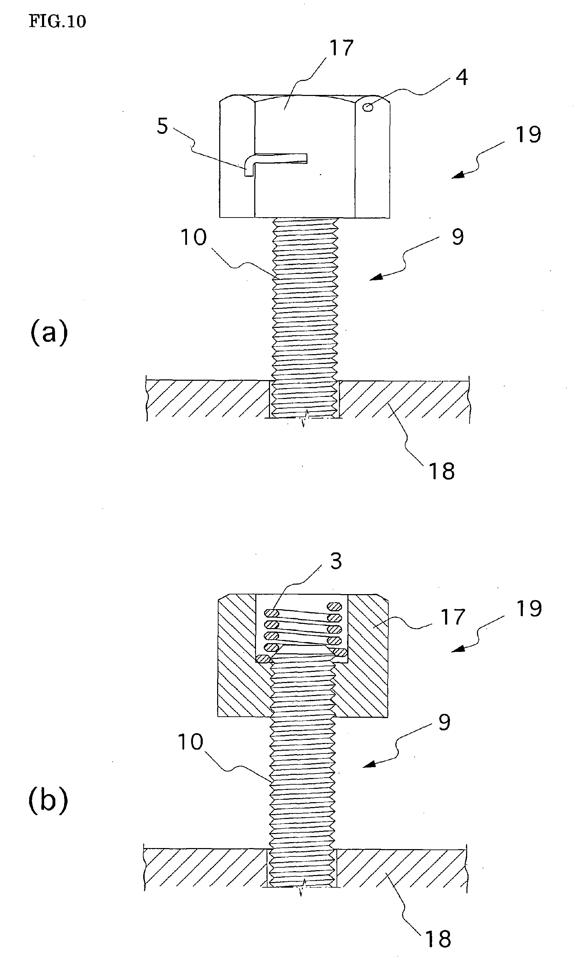

To attach the loosening preventing nut, the lower end of the nut main body 17 is fitted onto a tip of a leg portion 10 of a bolt 9 and a thread at a tip of the leg portion 10 of the bolt 9 is screwed into a thread groove of the threaded portion 15 of the nut main body 17 as shown in FIGS. 10A and 10B. By then rotating the nut main body 17 in the fastening direction, the tip of the leg portion 10 is made to cause the wire of the coil spring portion 3 to be fitted along the thread groove of the leg portion 10 of the bolt 9 from the lower end of the coil spring portion 3. By rotating the nut main body 17 while deforming the coil spring portion 3 in the direction of becoming expanded in its inner diameter from this state, the wire that fits into the thread groove becomes slightly separated from the thread groove so that the frictional force between the coil spring portion 3 and the thread groove of the leg portion is lessened, thereby the nut main body 17 is enabled to be smoothly rotated.

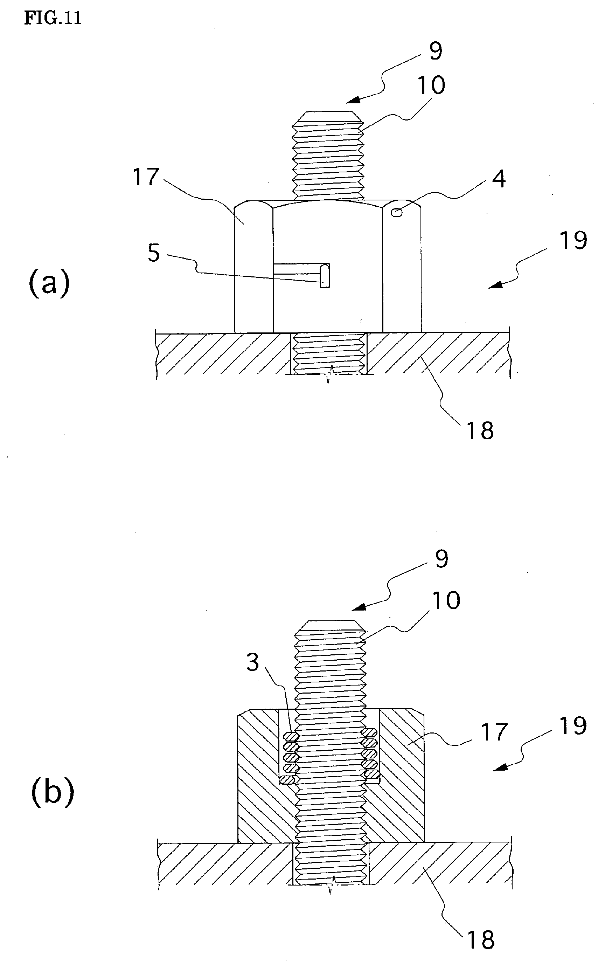

Thereafter, as shown in FIGS. 11A and 11B, the object to be fixed is rotated until the lower end of the nut main body 17 contacts an upper face of the object 18 tobe fixed and fastening is thereby completed. At this point, the tip of the lower end of the coil spring portion 3 is moved to the right end of the opening 7.

Though with the present embodiment, an example of fastening by rotating the object to be fixed until the lower end of the nut main body contacts the upper face of the object to be fixed is described, even if the lower end of the nut main body does not contact the upper face of the object to be fixed, adequate fastening can be achieved as long as the tip of the lower end of the coil spring portion is moved to the right end of the opening. That is, with the example of the loosening preventing nut according to the present invention, even if vibration or impact is applied after fastening, a force in the fastening direction acts via the coil spring portion and adequate fastening can be achieved and the lower end of the nut main body does not necessarily have to contact the upper face of the object to be fixed.

Here, when rotation of the nut main body 17 in a disengaging direction (removal direction) is attempted, the coil spring portion 3 is pulled in a direction in which its inner diameter shrinks and because the wire of the coil spring portion 3 becomes more strongly pressed against the inclined face of the thread groove, formed on the leg portion of the bolt, rotation of the nut main body is prevented.

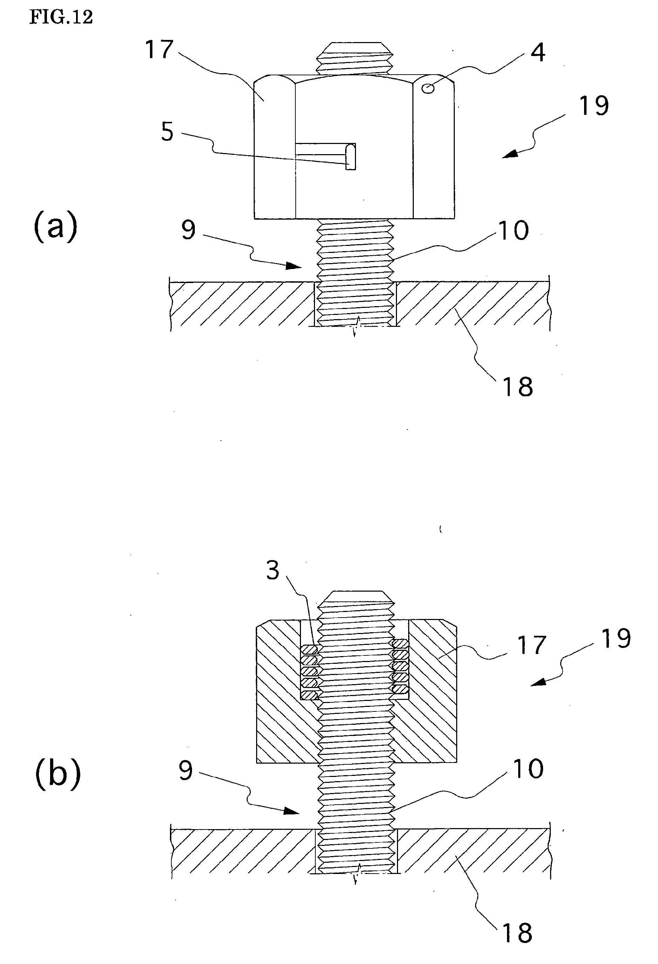

To remove the loosening preventing nut from the bolt, a rotating force in the disengaging direction (opposite direction with respect to the fastening direction) is applied to the nut main body 17 with the lower end of the coil spring portion 3 being held in the state shown in FIGS. 12A and 12B to make the coil spring portion 3 deform in a direction in which its inner diameter expands and the wire that fits in the thread groove, formed on the leg portion of the bolt, become slightly separated by the applied rotating force in the disengaging direction to thereby lessen the frictional force between the coil spring portion 3 and the thread groove of the leg portion 10 and enable smooth rotation in the removal direction and consequent removal of the loosening preventing nut from the bolt.

An example of handling of the loosening preventing nut by a commonly used tool shall now be described.

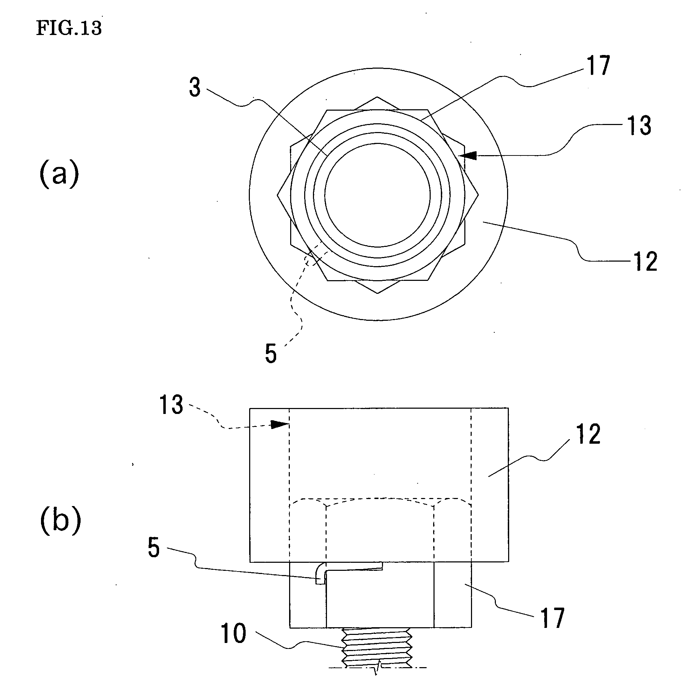

To attach the loosening preventing nut by means of a commonly used tool, first, the threaded portion 15 of the nut main body 17 is screwed onto the tip of the leg portion 10 of the bolt 9 as shown in FIGS. 13A and 13B. A dodecagonal offset wrench, socket wrench, or other fastening tool 12 is then fitted onto the nut main body 17. Here, corner portions of the nut main body 17 become fitted and latched inside latching corner portions 13 of an inner face of the fastening tool 12, with a lower face of the fastening tool 12 being arrested by the lower end of the coil spring portion 3 that protrudes from inside the opening 7 opened in the lower portion of the nut main body 17.

By then rotating the nut main body 17 in the fastening direction by the fastening tool 12 in this state, the loosening preventing nut is attached to the bolt. When attachment is completed, the lower end of the coil spring portion 3 is positioned at the right end of the opening 7, that is, at a central position of one side of the nut main body 17.

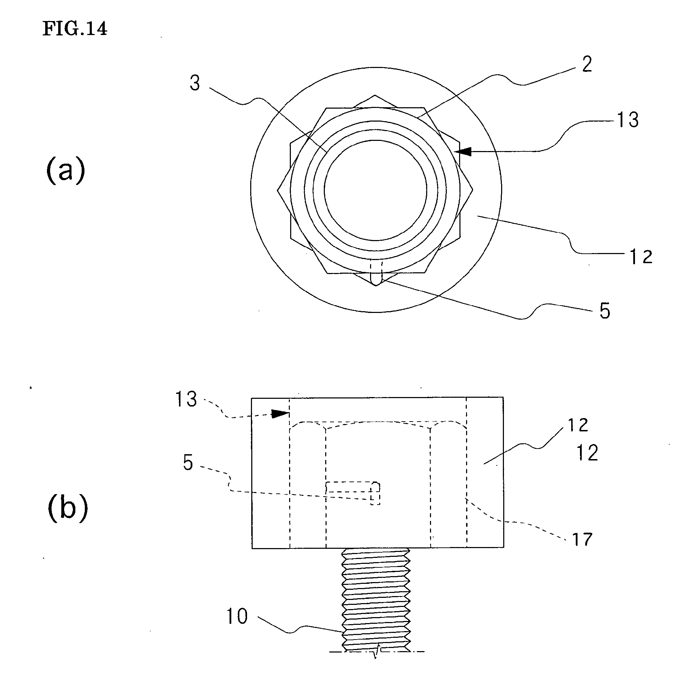

Meanwhile, to remove the loosening preventing nut by means of the commonly used tool, first, the fastening tool 12 is fitted onto the nut main body as shown in FIGS. 14A and 14B. Here, because the lower end of the coil spring portion 3 of the attached loosening preventing nut is in a state of protruding from inside the opening 7 at an angle of 90 degrees from the center of one side of the nut main body 17, the lower end of the coil spring portion 3 fits inside a latching corner portion 13 of the inner face of the fastening tool 12, and the coil spring portion 3 is thereby arrested.

Then from this state, the nut main body 17 is rotated in the removal direction by the fastening tool 12 to rotate the lower end of the coil spring portion 3 so as to push it out in the direction opposite the fastening direction with the lower end being arrested by the fastening tool 12, and because the coil spring portion is thereby deformed in the direction of becoming expanded in its inner diameter, the wire that fits in the thread groove formed on the leg portion of the bolt becomes slightly separated from the thread groove, the frictional force between the coil spring portion and the thread groove of the leg portion is lessened, and rotation in the removal direction can be performed smoothly.

Though for the fall-off preventing element and the loosening preventing nut according to the present invention, cases of clockwise rotating direction have been described above, there are nuts that are rotated in the counterclockwise direction, and with such a nut, the coil spring portion is wound in the counterclockwise direction and the opening is opened from the right side to the left side in the circumferential direction.

## Claims

1. A fall-off preventing element that is screwed onto a bolt, the fall-off preventing element comprising:
a coil spring portion; and
a cylindrical main body, affixing an upper end of the coil spring portion and having an opening formed therein in which a lower end of the coil spring portion is latched;
the inner diameter of the coil spring portion being made smaller than the outer diameter of a leg portion of the bolt, the lower end of the coil spring portion being latched in a diameter-expanded state onto the cylindrical main body, and the lower end of the coil spring portion being enabled to move in a diameter-expanding direction.

2. The fall-off preventing element according to Claim 1, wherein
the lower end of the coil spring portion protrudes from the opening.

3. The fall-off preventing element according to Claim 1 or 2, wherein
the protrusions are provided on the cylindrical main body.

4. A loosening preventing nut that is screwed onto a bolt, the loosening preventing nut comprising:
a coil spring portion; and
a nut main body, having a coil spring inserting portion, affixing an upper end of the coil spring portion and having an opening formed therein in which a lower end of the coil spring portion is latched, and a threaded portion with a thread groove formed therein;
the inner diameter of the coil spring portion being made smaller than the outer diameter of a leg portion of the bolt, the lower end of the coil spring portion being latched in a diameter-expanded state onto the coil spring inserting portion, and the lower end of the coil spring portion being enabled to move in a diameter-expanding direction.

5. The loosening preventing nut according to Claim 4, wherein the nut main body has a hexagonal shape and
the lower end of the coil spring is enabled to move to a position at a center of a side of the nut main body.

6. The loosening preventing nut according to Claim 4 or 5, wherein
the lower end of the coil spring portion protrudes from the opening.

7. The loosening preventing nut according to Claim 4, wherein
the position of the tip of the coil spring portion lies along a circumscribing circle of the nut main body.
